# EUROPEAN PATENT APPLICATION

(11) **EP 1 667 061 A1**
(43) Date of publication of application: **07.06.2006**
(21) Application number: 04771860.6
(22) Date of filing: 19.08.2004
(51) Int. Cl.: G06Q 10/00

(54) **RIGHT MANAGEMENT SERVER, RIGHT MANAGEMENT METHOD, AND RIGHT MANAGEMENT PROGRAM**

(30) Priority: 27.08.2003 JP 2003303516
(71) Applicant: Toryumon Corporation, Nakahara-ku, Kawasaki-shi, Kanagawa 2110006 (JP)
(72) Inventor: TONE, Nobuhiro c/o Toryumon Corporation, Kawasaki-shi, Kanagawa 211-0006 (JP)
(74) Representative: HOFFMANN EITLE
(86) International application number: PCT/JP2004/011899
(87) International publication number: WO 2005/022429

(57) **Abstract**

A right management server (2) includes a music data holding unit (11) for holding right information including right holder names of a copyright, a right of performer and a master disk right regarding music or right managers, and use conditions of music, a registration module (lOb) for registering the music right information and the use conditions in the music data holding unit, an input screen presentation module (10c) for presenting an input screen to write a music name desired to be used to a terminal of a music user side, a retrieval module (10d) for retrieving the music held in the music data holding unit based on a music name transmitted from the terminal of the music user side, a condition presentation module (10e) for presenting use conditions of the music retrieved by the retrieval module to the terminal of the music user side, and a music distribution module (10g) for distributing music to the terminal of the music user side. According to this right management server (2), it is possible to easily obtain use permission of the three rights of the copyright, the right of performer, and the master disk right regarding the music.

## Description

### TECHNICAL FIELD

The present invention relates to a right management server, a right management method and a right management program for managing rights such as music copyrights.

### BACKGROUND ART

Intellectual property rights include a patent right, a model utility right, a design right, a trademark right, a copyright, and the like. In the case of the patent right, as rights are generated by registration, and patents are laid open in Patent Gazette or the like, retrieval or reference is relatively easy. In the case of the copyright, however, as rights are generated by creation, it is difficult to compile them in a database. For one creation, a right where a patent right and a design right are different from each other may be generated. To manage such intellectual property rights en bloc, an intellectual property right management system that registers, monitors and permits use of intellectual property rights has been disclosed (e.g., Japanese Patent Unexamined Publication 2001-282947).

In the case of the copyright, a plurality of rights may be generated for one work. For example, when one piece of music is created, and played by a performer, and the played music is fixed in a record, three rights, i.e., a copyright provided to a creator, a right provided to the performer (right of the performer), and a right ("master disk right") provided to a record producer who has fixed the music in the record for the first time ("master disk right holder" hereinafter), are generated.

When he uses the music, a user needs use permission of the three rights, the copyright, the right of the performer, and the master disk right. These rights can be transferred, and current right holders may be different from the creator of the music, the performer who has actually played the music, and the master disk right holder who has actually fixed the music in the record. Moreover, management of the rights may be entrusted to another management company.

In this case, the user must judge whose use permission is necessary to use the music, and negotiate with each right holder for permission. Thus, the user must go through a complex procedure.

The present invention has been developed with the above problems in mind, and it is an object of the invention to provide a server, a method and a program for managing rights, which can easily obtain use permission of three rights.

### DISCLOSURE OF THE INVENTION

To achieve the object, according to a first feature of the present invention, a right management server includes (a) a music data holding unit for holding right information of each music including right holder names of three rights of a copyright owned by an author who has created the music, a right of performer owned by a performer who has played the music, and a master disk right owned by a master disk right holder who has fixed the music in a record for the first time, and use conditions including rates of music use prices received by the author, the performer and the master disk right holder, (b) a registration module for registering the music right information and the use conditions in the music data holding unit, (c) an input screen presentation module for presenting an input screen to write a music name desired to be used to a terminal of a music user side when there is access from the terminal of the music user side, (d) a retrieval module for retrieving the music held in the music data holding unit based on a music name transmitted from the terminal of the music user side, (e) a condition presentation module for presenting use conditions of the music retrieved by the retrieval module to the terminal of the music user side, (f) a price distribution module for distributing the music use prices to the author, the performer and the master disk right holder according to the use conditions held in the music data holding unit, and (g) a music distribution module for distributing music to the terminal of the music user side.

According to the right management server of the first feature, it is possible to easily obtain use permission of the three rights, i.e., the copyright, the right of performer, and the master disk right regarding the music.

The music data holding unit of the right management server of the first feature may hold right information including names of right holders after transfer of the copyright, the right of performer, and the master disk right or names of managers entrusted to mange the copyright, the right of the performer and the master disk right, and rates of music use prices received by the right holders after the transfer or the managers, and the price distribution module may distribute the music use prices to the right holders after the transfer or the managers. According to this right management server, it is possible to easily obtain use permission with respect to the current right holders of the copyright, the right of the performer, and the master disk right.

The input screen presentation module of the right management server of the first feature may present a screen for inputting the use conditions of the music desired to be used to the terminal of the music user side, and the retrieval module may retrieve the music held in the music data holding unit based on the music name transmitted from the terminal of the music user side and the use conditions. According to this right management server, a search engine function for presenting use conditions coincident with the use conditions presented by the music user side can be provided.

The music distribution module of the right management server of the first feature may add a contract contents file describing the use conditions of the music to distribute the music. According to this right management server, it is possible to easily verify the contract contents.

According to a second feature of the present invention, a right management method includes in a server for managing use permission of a copyright, a right of a performer, and a master disk right regarding music (a) a step of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder in a music data holding unit, (b) a step of presenting an input screen fro writing a music name desired to be used to a terminal of a music user side when there is access from the terminal of the music user side, (c) a step of retrieving the music held in the music data holding unit based on the music name transmitted from the terminal of the music user side, (d) a step of presenting the use conditions of the music retrieved by the retrieval step to the terminal of the music user side, (e) a step of distributing the music use prices to the author, the performer and the master disk right holder according to the use conditions held in the music data holding unit, and (f) a step of distributing music to the terminal of the music user side.

According to the right management method of the second feature, it is possible to easily obtain use permission of the three rights, i.e., the copyright, the right of performer, and the master disk right regarding the music.

The registration step of the right management method of the second feature may register hold right information including names of right holders after transfer of the copyright, the right of performer, and the master disk right or names of managers entrusted to mange the copyright, the right of the performer and the master disk right, and rates of music use prices received by the right holders after the transfer or the managers, and the price distribution step may distribute the music use prices to the right holders after the transfer or the managers. According to this right management method, it is possible to easily obtain use permission with respect to the current right holders of the copyright, the right of the performer, and the master disk right.

The input screen presentation step of the right management method of the second feature may present a screen for inputting the use conditions of the music desired to be used to the terminal of the music user side, and the retrieval step may retrieve the music held in the music data holding unit based on the music name transmitted from the terminal of the music user side and the use conditions. According to this right management method, a search engine function for presenting use conditions coincident with the use conditions presented by the music user side can be provided.

The music distribution step of the right management method of the second feature may add a contract contents file describing the use conditions of the music to distribute the music. According to this right management method, it is possible to easily verify the contract contents.

According to a third feature of the present invention, a right management program for causing a server which manages use permission of a copyright, a right of a performer, and a master disk right regarding music to execute (a) a procedure of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder in a music data holding unit, (b) a procedure of presenting an input screen fro writing a music name desired to be used to a terminal of a music user side when there is access from the terminal of the music user side, (c) a procedure of retrieving the music held in the music data holding unit based on the music name transmitted from the terminal of the music user side, (d) a procedure of presenting the use conditions of the music retrieved by the retrieval step to the terminal of the music user side, (e) a procedure of distributing the music use prices to the author, the performer and the master disk right holder according to the use conditions held in the music data holding unit, and (f) a procedure of distributing music to the terminal of the music user side.

The registration procedure of the right management program of the third feature may register right information including names of right holders after transfer of the copyright, the right of performer, and the master disk right or names of managers entrusted to mange the copyright, the right of the performer and the master disk right, and rates of music use prices received by the right holders after the transfer or the managers, and the price distribution procedure may distribute the music use prices to the right holders after the transfer or the managers.

The input screen presentation procedure of the right management program of the third feature may present a screen for inputting the use conditions of the music desired to be used to the terminal of the music user side, and the retrieval procedure may retrieve the music held in the music data holding unit based on the music name transmitted from the terminal of the music user side and the use conditions.

The music distribution procedure of the right management method of the third feature may add a contract contents file describing the use conditions of the music to distribute the music.

By reading the right management program of the third feature of the present invention, it is possible to cause the right management server or the like to execute the procedures.

### BRIEF DESCRIPTION OF THE DRAWINGS

FIG. 1 is a schematic diagram showing a right management system according to an embodiment.
FIG. 2 is a diagram showing a configuration of the right management system according to the embodiment.
FIG. 3 is a diagram showing a configuration of a right management server according to the embodiment.
FIG. 4 is a diagram showing an example of music data held by the right management server of the embodiment.
FIG. 5 is a flowchart of a right management method according to the embodiment.
FIG. 6 is a time chart of the right management method of the embodiment.
FIGS. 7(a) to 7(c) are diagrams each showing a screen example displayed in a terminal according to the right management method of the embodiment.

### BEST MODE OF CARRYING OUT THE INVENTION

Next, the preferred embodiments of the present invention will be described with reference to the accompanying drawings. Throughout the drawings, identical or similar sections are denoted by identical or similar reference numerals. It should be noted, however, that the drawings are schematic.

### (Configuration of Right Management System)

An embodiment of the present invention is directed to a right management system which manages three rights of a copyright, a right of a performer, and a master disk right regarding music, and enables a user wishing to use the music to easily obtain use permission.

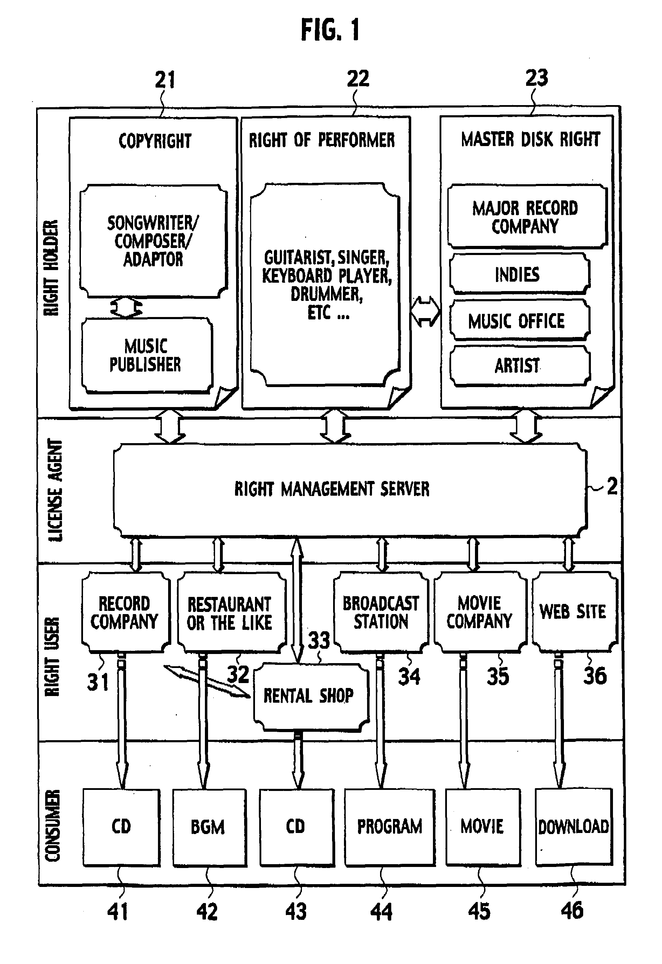

As shown in FIG. 1, as a music right holder, there is an author such as a songwriter, composer, or an adaptor who has a copyright 21. There is a performer having a right 22 of a performer such as a guitarist who plays the music, a singer, a keyboard player or a drummer. There is a master disk right holder having a master disk right 23 such as a major record company, which has fixed the music in a record for the first time, indies, a music office or an artist. The plurality of rights are generated for one piece of music, and permission from each right holder is necessary for using the music. The copyright 21, the right 22 of the performer, and the master disk right 23 can be transferred, and a person who actually has these rights is not limited to the author who has created the music, the performer who has played the music, or the master disk right holder who has fixed the music in the record. Additionally, management of the rights may be entrusted to another management company or the like. The right holder who has or manages thee copyright 21, the right 22 of the performer, and the master disk right 23 can give music use permission by registering music right information and music use conditions in a right management server 2 owned by a license agent. The right management server 2 will be described below in detail.

Users of the music include a record company 31, a restaurant or the like 32, a rental shop 33, a broadcast station 34, a movie company 35, a web site 36, and the like. They can obtain use permission of desired music by accessing the right management server 2. For example, the record company 31 can sell a CD 41 of desired music once it obtains use permission of the music. The restaurant or the like 32 can play the music as BGM once it obtains permission of a music public transmission right. The rental shop 33 can lend a CD 43 of the music once it obtains permission of a music lending right. The broadcast station 34 can broadcast the music through a program 44 once it obtains permission of a music transmission right (broadcast right or cable broadcast right). The movie company 35 can use the music in a movie 45 once it obtains permission of a music copying right. The web site 36 can allow a user who has accessed the music to download it 46 once it obtains permission of music transmission enable right.

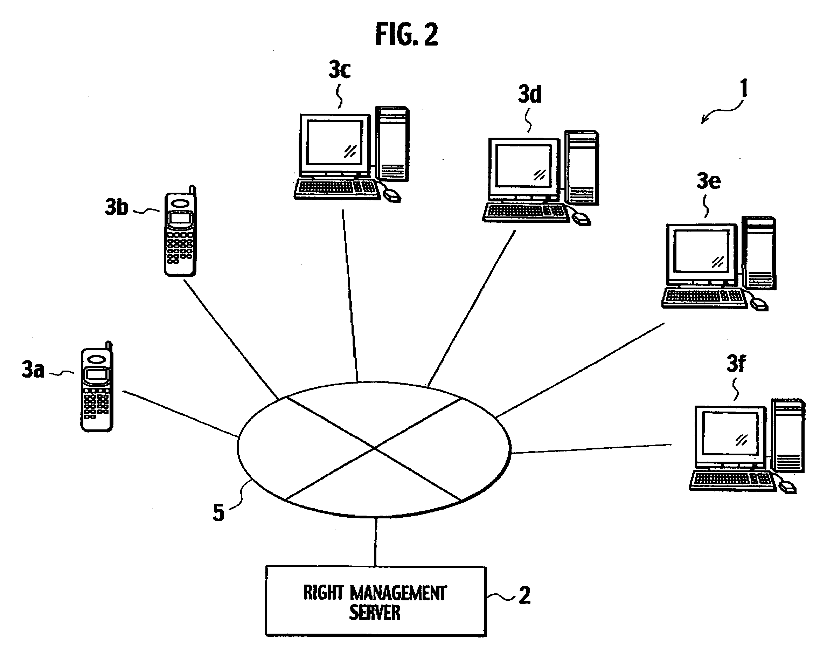

As shown in FIG. 2, the right management system of the embodiment of the present invention includes at least Internet (communication network) 5, the right management server 2 connected to the Internet 5, and a plurality of terminals 3a, 3b, ...., 3f. The terminals 3a, 3b,..., 3f are for users of the right management system 1. The users include both of a holder side of a music right such as a copyright and a music user side such as a record company.

For the terminal 3a, 3b, ..., 3f, a portable telephone, a personal computer, and those such as PHS, PDA, and an electronic databook connected to the network can be used.

### (Configuration of Right Management Server)

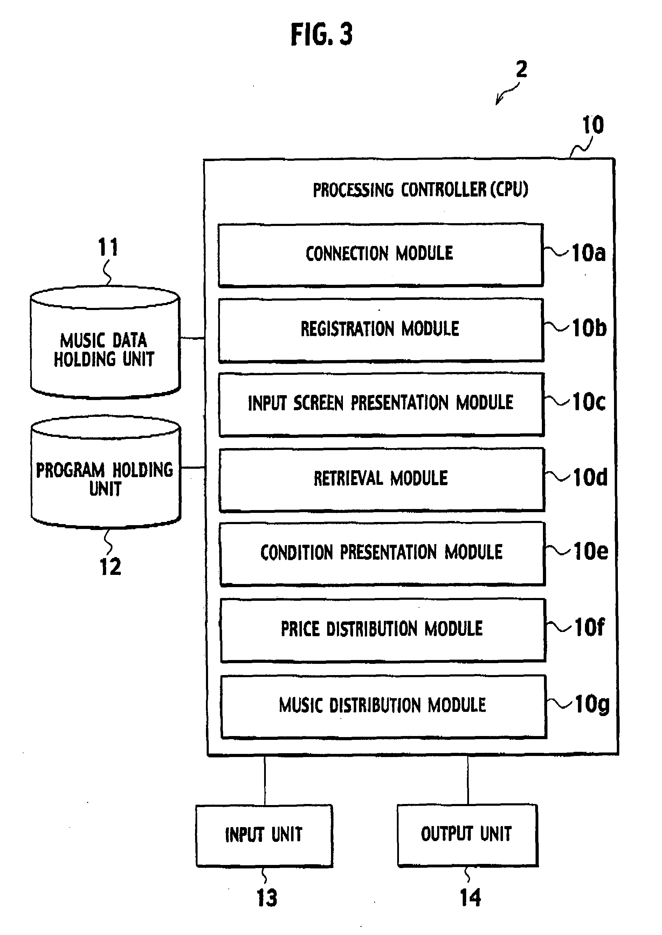

As shown in FIG. 3, the right management server 2 of the embodiment of the present invention manages use permission of a copyright, a right of a performer, and a master disk right regarding music, and includes a music data holding unit 11 for holding right information of each music including right holder names of three rights, i.e., a copyright owned by an author who has created the music, a right of performer owned by a performer who has played the music, and a master disk right owned by a master disk right holder which has fixed the music in a record for the first time, and use conditions including rates of music use prices received by the author, the performer and the master disk right holder, a registration module 10b for registering the music right information and the use conditions in the music data holding unit, an input screen presentation module 10c for presenting an input screen to write a music name desired to be used to the terminals 3a, 3b,..., 3f of the music user side, a retrieval module 10d for retrieving the music held in the music data holding unit based on the music name transmitted from the terminals 3a, 3b, ..., 3f of the music user side, a condition presentation module 10e for presenting the use conditions of the music retrieved by the retrieval module 10d to the terminals 3a, 3b, ..., 3f of the music user side, a price distribution module 10f for distributing the music use prices to the author, the performer and the master disk right holder according to the use conditions held in the music data holding unit 11, and a music distribution module 10g for distributing music to the terminals 3a, 3b, ..., 3f of the music user side.

The right management server 2 of the embodiment of the present invention can be configured by including a processing controller (CPU) 10 and incorporating a connection module 10a, the registration module 10b, the input screen presentation module 10c, the retrieval module 10d, the condition presentation module 10e, the price distribution module 10f, and the music distribution module 10g in the CPU 10. These modules can be realized by executing a dedicated program for using a predetermined program language in a general-purpose computer such as a personal computer. The music data holding unit 11, a program holding unit 12, and input unit 13, and an output unit 14 are connected to the CPU 10.

The connection module 10a connects the right management server 2 to the Internet 5 to transfer data.

The registration module 10b registers music right information such as a copyright presented from the terminals 3a, 3b, ..., 3f of the right holder side and use conditions in the music data holding unit 11. The right information or the like may be directly registered in the right management server 2 by using the input unit 13 without being passed through the Internet 5.

When accessed from the terminals 3a, 3b,..., 3f of the music user side such as a record company, the input screen presentation module 10c presents an input screen for writing which music is to be used under what conditions to the terminals 3a, 3b, ..., 3f.

The retrieval module 10d retrieves the music held in the music data holding unit 11 based on use conditions transmitted from the terminals 3a, 3b, ..., 3f of the music user side. By the retrieval module 10d or the like, the right management server 2 is provided with a search engine function of presenting use conditions coincident with the use conditions presented from the music user side.

The condition presentation module 10e presents the use conditions of the music retrieved by the retrieval module 10d to the terminals 3a, 3b, ..., 3f.

The price distribution module 10f distributes use fees paid by a music user who has agreed to the use conditions to the author, the performer and the master disk right holder according to the use conditions held in the music data holding unit 11. Specifically, whether fees have been transferred or not to a bank transfer account or whether withdrawal of fees together with use fees of a provider has been completed or not is checked to distribute use fees (prices) to the author, the performer, and the master disk right holder.

The music distribution module 10g distributes a music file to the terminals 3a, 3b, ..., 3f of the music user side. In this case, a contract content file may simultaneously be transmitted.

The music data holding unit 11 holds the right information and the use conditions of the music transmitted from the terminals 3a, 3b,..., 3f of the right holder side. It also holds a music file which is music itself.

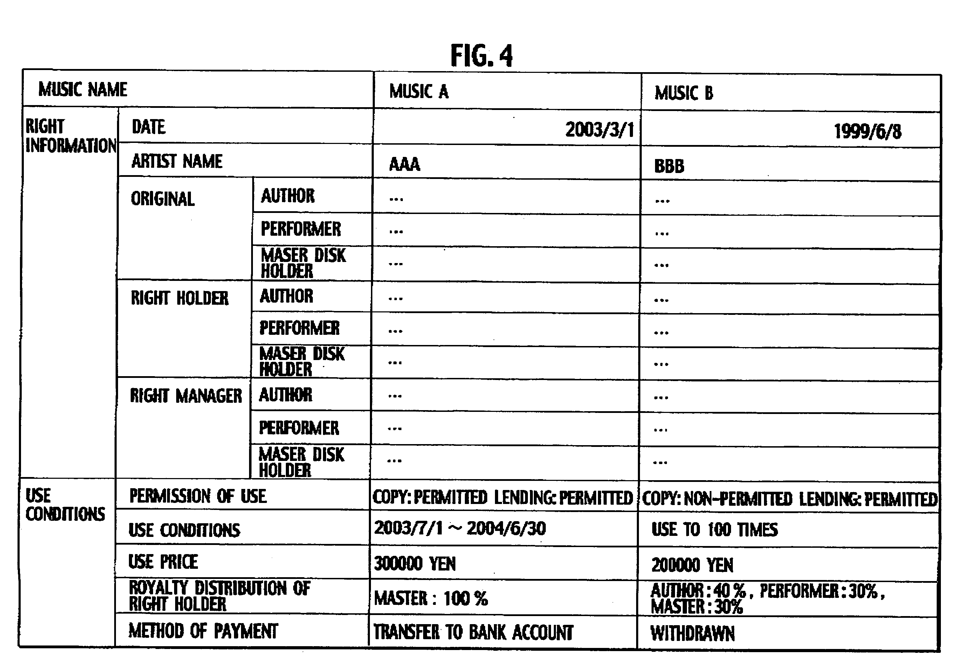

As shown in FIG. 4, right information and use conditions are written for each music name in the music data. The right information includes "DATE OF RIGHT", "ARTIST NAME", a person who has first owned a right ("ORIGINAL" in FIG. 4), a current right holder ("RIGHT HOLDER" in FIG. 4), a person entrusted to manage a right ("RIGHT MANAGER" in FIG. 4), and the like. For each of the original, the right holder, and the right manager, there are three rights, i.e., an author, a performer who has played the music, and a master disk right holder who has fixed the music in the record for the first time. A right holder and a manager are written in the right information.

The use conditions include "USE PERMISSION", "USE CONDITIONS", "USE PRICE", "ROYALTY DISTRIBUTION OF RIGHT HOLDER", "PAYING METHOD", and the like. The copyright includes various rights such as a copying right of tangibly reproducing a work, a lending right of presenting a copy to the public by lending, a pubic transmission right of transmitting the work through radio or cable electric communication, a transmission enable right of enabling access from a terminal by an input or the like (uploading) to the server in a stage before a transmission operation in transmission (interactive transmission) carried out according to each access from an Internet terminal. The "USE PERMISSION" is information indicating which right of the copyright is permitted. For example, in the case of music AAA, a copying right and a lending right can be used. In the case of music BBB, a lending right can be used while a copying right cannot be used. The "USE CONDITIONS" define a period and the number of using times of music, and its target. For example, the music AAA can be used from July 1 of 2003 to June 30 of 20004, and the music BBB can be used up to 100 times. Various other conditions can be defined, such as a target of use permission is limited to a major record company. The "USE PRICE" is fees which the music user pays to the right holder to use the music. For example, fees are 300000 yen for the music A, and 200000 yen for the music BBB. The use price can be set for each kind (copying right or lending right) of the copyright. The "ROYALTY DISTRIBUTION OF RIGHT HOLDER" indicates a distribution rate of the "USE PRICE" in the copyright, the right of the performer, and the master disk right. For example, in the case of the music AAA, 100% of the "USE PRICE" is received by the master disk right holder. In the case of the music BBB, 40% of the "USE PRICE" is received by the copyright holder, 30% is received by a person who has a right of performer, and 30% is received by the master disk right holder. The "PAYING METHOD" indicates a method of paying the "USE PRICE". For example, in the case of the music AAA, the "USE PRICE" must be transferred to a designated bank account. In the case of the music BBB, the "USE PRICE" is withdrawn as contents use fees presented simultaneously with provider use fees by the right management server 2. Additionally, according to the paying method, installment payment may be written if it is possible.

The music data such as the right information or the use conditions may be superimposed on the music file itself, or included somewhere (header) other than the music in the music file. It may be held as a file different from the music file. The right information or the use conditions may be encrypted or not encrypted. When the music file is copied/changed, the music data is always inherited accompanying the music file.

For the music data holding unit 11, an internal memory such as a ROM or an external memory such as a hard disk or a flexible disk may be used.

The program holding unit 12 is a storage medium for storing a right management program which causes the CPU 10 to execute music registration processing, input screen presentation processing, or music retrieval processing. As storage media, for example, a RAM, a hard disk, a flexible disk, a compact disk, an IC chip, a cassette tape, and the like can be cited. According to such a storage medium holding the program, storing, transporting, selling or the like of the program can be easily carried out.

The input device 13 is a device such as a keyboard, a mouse or the like. When the input unit 13 performs an input operation, corresponding key information is transmitted to the CPU 10. The input unit 13 can input the music right information or the use conditions. The output unit 14 is a screen such as a monitor, and a liquid crystal display (LCD), a light emitting diode (LED) panel, an electroluminescence (EL) panel, or the like can be used. This output unit 14 can display the music data held in the music data holding unit 11.

According to the right management server 2 of the embodiment of the present invention, it is possible to easily obtain use permission of the three rights, i.e., the copyright, the right of performer and the master disk right regarding the music.

### (Right Management Method and Right Management Program)

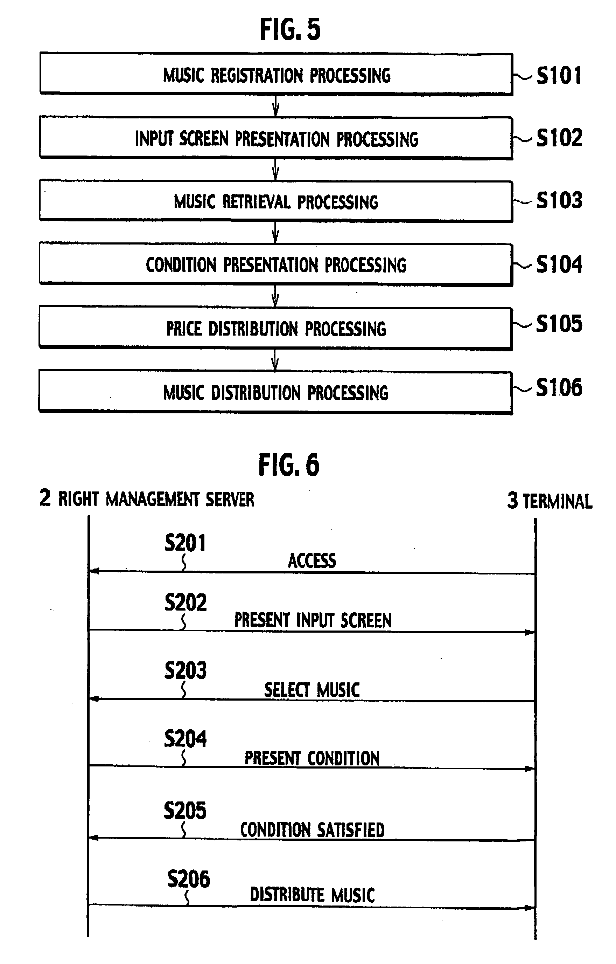

Next, referring to Figs. 5 to 7, a right management method of an embodiment of the present invention will be described. The right management method described below can be realized by reading and executing a right management program held in the program holding unit or the like. In other words, each step of the right management method corresponds to each step executed by the right management program.

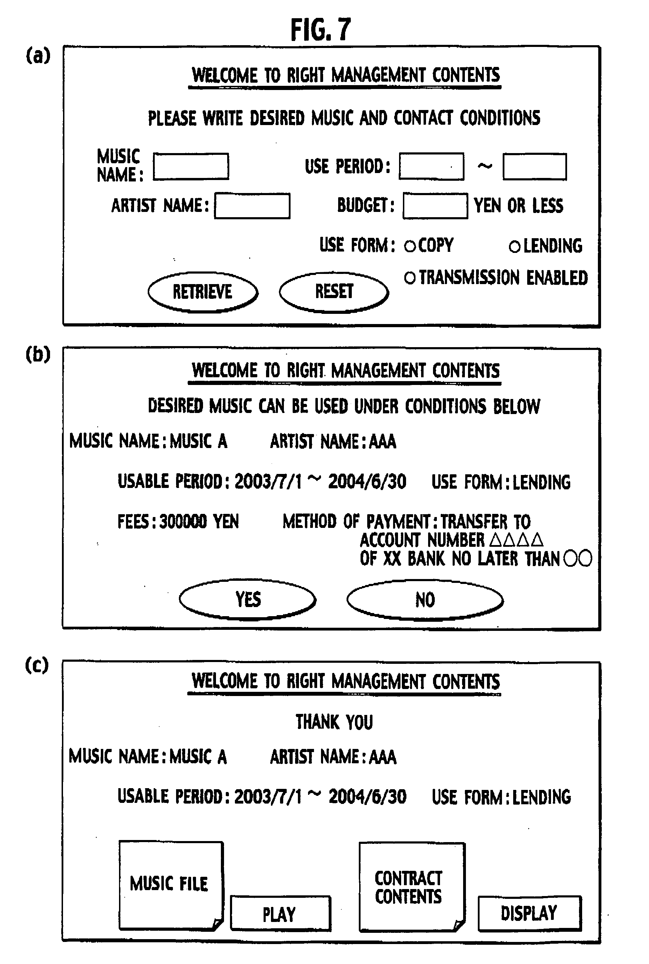

FIG. 5 shows a processing operation of the right management server 2 of the embodiment of the present invention, FIG. 6 is a time chart between the right management server 2 and the terminals 3a, 3b, ..., 3f of the music user side, and FIGS. 7 (a) to 7(c) show screen display examples of the terminals 3a, 3b, ..., 3f of the music user side.
(a) First, in step S101, the right management server 2 carries out music registration. In other words, music right information and right conditions presented from the terminals 3a, 3b, ..., 3f of the right holder side of a copyright or the like are stored in the music data holding unit 11. The right information or the like may be directly input to the right management server 2 by using the input unit 14 without being passed through the Internet 5.
(b) Next, upon access from the terminals 3a, 3b,... (step S201 of FIG. 6), in step S102, the right management server 2 presents an input screen to screens of the terminals 3a, 3b, ..., 3f (step S202 of FIG. 6). FIG. 7 (a) shows an input screen example displayed in the terminals 3a, 3b, ..., 3f. As shown in FIG. 7 (a), a music user can select a music name, an artist name, a use period, a budget, a use form, or the like (step S203 of FIG. 6). For example, by setting a budge equal to or less than "300000 yen", music coincident with the budge is retrieved. Thus, according to the right management method of the embodiment, a search engine that presents use conditions coincident with the used conditions provided by the music user side can be run.
(c) In step S103, the right management server 2 executers music retrieval processing. In other words, the music held in the music data holding unit 11 is retrieved based on the use conditions transmitted from the terminals 3a, 3b, ..., 3f of the music user side. For example, when the music user selects music A, the music A is retrieved from information held in the music data holding unit 11. In this case, when a use period, a budge, and a use form are designated, music data that satisfies the conditions is retrieved.
(d) Then, in step S104, the right management server 2 presents conditions on the screens of the terminals 3a, 3b,..., 3f (step S204 of FIG. 6). FIG. 7 (b) shows a condition presentation screen example displayed in the terminals 3a, 3b,..., 3f. In FIG. 7 (b), a use period of the music A is July 1 of 2003 to June 30 of 2004, a use form is lending, fees are 300000 yen, and a paying method is bank transfer. The music user judges whether to agree to the presented use conditions, and clicks a button "AGREE" or "NOT AGREE" displayed in the terminals 3a, 3b, ..., 3f (step S205 of FIG. 6).
(e) When information of "AGREE" is transmitted from the terminals 3a, 3b, ..., 3f of the music user side, in step S105, the right management server 2 executes price distribution processing. In other words, the right management server 2 refers to the "PAYING METHOD" of the use conditions held in the music data holding unit 11, and receives or refer to transfer information from a predetermined bank server to check payment of fees. Then, it refers to the "ROYALTY DISTRIBUTION OF RIGHT HOLDER" of the use conditions to distribute the use price to the author, the performer and the master disk right holder. In the case of the music A shown in FIG. 4, the use price 300000 yen is distributed to the maser disk right holder. In the case of music B, 40% of the use price 200000 yen is distributed to the author, 30% is distributed to the performer, and 30% is distributed to the master disk right holder. When a right is transferred and a name of a right holder is written in the section of "RIGHT HOLDER", the use price is distributed to each holder of the copyright, the right of performer, the master disk right. When right management is entrusted and a name of a manager is written in the section of "RIGHT HOLDER", the use price is distributed to each manager of the copyright, the right of the performer, and the master disk right. Distribution destinations of the use price include an original author, a performer, a master disk right holder, a copyright holder as a right holder, a person who has a right of performer, the master disk right holder, and each manager of the copyright, the right of the performer and the master disk right holder. The right management server 2 understands which of 9 (9 companies) the use price is distributed to.
(f) Next, in step S106, the right management server 2 executes music distribution processing to the terminals 3a, 3b, ..., 3f (step S206 of FIG. 6). FIG. 7(c) shows a music distribution screen example displayed in the terminals 3a, 3b, ..., 3f. In FIG. 7(c), contract contents are added to a music file to be distributed. In the contact contents, right information or use conditions for a right to be used are written. By adding the contract contents, it is possible to facilitate verification of right use.

According to the right management method of the embodiment of the present invention, it is possible to easily obtain use permission of the three rights, i.e., the copyright, the right of performer, and the master disk right regarding the music.

### (Operations and Effects of Right Management Server, Right Management Method, And Right Management Program of the Embodiment)

Conventionally, when wishing to use music, the user has had to execute the step of searching a right holder of the music, establish use conditions, and pay a price for each music. According to the right management server, the right management method and the right management program of the embodiment, easy reference to the right information and the use conditions of the music enables great simplification of permission work. Especially, when a music sound including not only a melody but also singer's voice or the like is downloaded to be used as a calling sound of a portable telephone (so-called "ARRIVED"), the use permission of the copyright, the right of performer, and the master disk right is necessary, giving a great advantage of using the right management server 2.

It is possible to eliminate a possibility of interference by a third party who does not speak for each user between the user and the right holder. As there is no such a third party, a use price can be directly paid to the right holder, giving an advantage of increased profits to the right holder.

As the name of the right holder and the time of right generation are clearly held, it is possible to prevent infringement of right such as plagiarism.

Furthermore, through the mechanism of the right management server, the right management method and the right management program, a new right is generated when music whose right information and use conditions can be referred to is used for video BGM. By adding the right information and the use conditions, it is possible to manage various contents data treating music en bloc.

### (Other Embodiments)

The embodiment of the present invention has been described. It should be understood, however, that the description of parts of the disclosure and the drawings are in no way limitative of the invention. From the disclosure, various alternative modes, embodiments and operation technologies will become apparent to those skilled in the art.

For example, as shown in FIG. 3, in the right management server 2 of the embodiment of the present invention, the music data holding unit 11 and the program holding unit 12 are separately disposed. However, one holding unit may be shared. The right management server 2 of the embodiment of the present invention includes the connection module 10a, the registration module 10b, ..., and the music distribution module 10g in one CPU 10. However, these components may be separated in two or more processing controllers. In this case, the controllers are interconnected through a bus to enable data transfer therebetween.

According to the right management method of the embodiment of the present invention, the music distribution processing is carried out after the execution of the payment checking processing. However, the music distribution processing may be executed before fees are paid.

Referring to FIG. 7(b), the use enable period, the use form and the like are displayed on the screen. However, right information and use conditions of music such as a name of the right holder may be additionally displayed.

The embodiment has been described by taking the example of the music data. However, in addition to the music, the present invention can be applied to permission work when a file including image data is downloaded. Moreover, the present invention can be applied to permission work when a computer application such as game software is downloaded.

Needless to say, the present invention includes various embodiments not described here. Thus, the technical scope of the invention is defined only by specific items of appended claims valid from the foregoing description.

### INDUSTRIAL APPLICABILITY

As described above, the right management server of the present invention can easily obtain use permission of the three rights, i.e., the copyright, the right of performer, and the master disk right regarding the music. Hence, the invention is useful for permission work when the music is downloaded.

## Claims

1. A right management server comprising:
a music data holding unit (11) configured to hold right information of each music including right holder names of three rights of a copyright owned by an author who has created the music, a right of performer owned by a performer who has played the music, and a master disk right owned by a master disk right holder who has fixed the music in a record for the first time, and use conditions including rates of music use prices received by the author, the performer and the master disk right holder;
a registration module (10b) configured to register the music right information and the use conditions in the music data holding unit (11);
an input screen presentation module (10c) configured to present an input screen to write a music name desired to be used to a terminal of a music user side when there is access from the terminal of the music user side;
a retrieval module (10d) configured to retrieve the music held in the music data holding unit (11) based on a music name transmitted from the terminal of the music user side;
a condition presentation module (10e) configured to present use conditions of the music retrieved by the retrieval module 10d to the terminal of the music user side;
a price distribution module (10f) configured to distribute the music use prices to the author, the performer and the master disk right holder according to the use conditions held in the music data holding unit (11) ; and
a music distribution module (10g) configured to distribute music to the terminal of the music user side.

2. The right management server according to claim 1, wherein:
the music data holding unit (11) holds right information including names of right holders after transfer of the copyright, the right of performer, and the master disk right or names of managers entrusted to mange the copyright, the right of the performer and the master disk right, and rates of music use prices received by the right holders after the transfer or the managers, and
the price distribution module (10f) distributes the music use prices to the right holders after the transfer or the managers.

3. The right management server according to claim 1 or 2, wherein:
the input screen presentation module (10c) presents a screen for inputting the use conditions of the music desired to be used to the terminal of the music user side, and
the retrieval module (10d) retrieves the music held in the music data holding unit based on the music name transmitted from the terminal of the music user side and the use conditions.

4. The right management server according to any one of claims 1 to 3, wherein the music distribution module (10g) adds a contract contents file describing the use conditions of the music to distribute the music.

5. A right management method comprising in a server (2) for managing use permission of a copyright, a right of a performer, and a master disk right regarding music:
a step of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder in a music data holding unit 11;
a step of presenting an input screen fro writing a music name desired to be used to a terminal of a music user side when there is access from the terminal of the music user side;
a step of retrieving the music held in the music data holding unit 11 based on the music name transmitted from the terminal of the music user side;
a step of presenting the use conditions of the music retrieved by the retrieval step to the terminal of the music user side;
a step of distributing the music use prices to the author, the performer and the master disk right holder according to the use conditions held in the music data holding unit 11; and
a step of distributing music to the terminal of the music user side.

6. A right management program for causing a server 2 which manages use permission of a copyright, a right of a performer, and a master disk right regarding music to execute:
a procedure of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder in a music data holding unit 11;
a procedure of presenting an input screen fro writing a music name desired to be used to a terminal of a music user side when there is access from the terminal of the music user side;
a procedure of retrieving the music held in the music data holding unit 11 based on the music name transmitted from the terminal of the music user side;
a procedure of presenting the use conditions of the music retrieved by the retrieval step to the terminal of the music user side;
a procedure of distributing the music use prices to the author, the performer and the master disk right holder according to the use conditions held in the music data holding unit 11; and
a procedure of distributing music to the terminal of the music user side.

## Amended claims

### Amended claims under Art. 19.1 PCT

**1.** Amended) A right management server comprising:
a music data holding unit (11) configured to hold right information of each music including right holder names of three rights of a copyright owned by an author who has created the music, a right of performer owned by a performer who has played the music, and a master disk right owned by a master disk right holder who has fixed the music in a record for the first time, and use conditions including rates of music use prices received by the author, the performer and the master disk right holder, and information indicating which right of the copyright is permitted;
a registration module (10b) configured to register the music right information and the use conditions in the music data holding unit (11);
an input screen presentation module (10c) configured to present an input screen to write a music name desired to be used to a terminal of a music user side when there is access from the terminal of the music user side;
a retrieval module (10d) configured to retrieve the music held in the music data holding unit (11) based on a music name transmitted from the terminal of the music user side;
a condition presentation module (10e) configured to present use conditions of the music retrieved by the retrieval module 10d to the terminal of the music user side;
a price distribution module (10f) configured to distribute the music use prices to the author, the performer and the master disk right holder according to the use conditions held in the music data holding unit (11); and
a music distribution module (10g) configured to distribute music to the terminal of the music user side.

**2.** The right management server according to claim 1, wherein:
the music data holding unit (11) holds right information including names of right holders after transfer of the copyright, the right of performer, and the master disk right or names of managers entrusted to mange the copyright, the right of the performer and the master disk right, and rates of music use prices received by the right holders after the transfer or the managers, and
the price distribution module (10f) distributes the music use prices to the right holders after the transfer or the managers.

**3.** The right management server according to claim 1 or 2, wherein:
the input screen presentation module (10c) presents a screen for inputting the use conditions of the music desired to be used to the terminal of the music user side, and
the retrieval module (10d) retrieves the music held in the music data holding unit based on the music name transmitted from the terminal of the music user side and the use conditions.

**4.** The right management server according to any one of claims 1 to 3, wherein the music distribution module (10g) adds a contract contents file describing the use conditions of the music to distribute the music.

**5.** (Amended) A right management method comprising in a server (2) for managing use permission of a copyright, a right of a performer, and a master disk right regarding music:
a step of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder, and information indicating which right of the copyright is permitted in a music data holding unit 11;
a step of presenting an input screen fro writing a music name desired to be used to a terminal of a music user side when there is access from the terminal of the music user side;
a step of retrieving the music held in the music data holding unit 11 based on the music name transmitted from the terminal of the music user side;
a step of presenting the use conditions of the music retrieved by the retrieval step to the terminal of the music user side;
a step of distributing the music use prices to the author, the performer and the master disk right holder according to the use conditions held in the music data holding unit 11; and
a step of distributing music to the terminal of the music user side.

**6.** (Amended) A right management program for causing a server 2 which manages use permission of a copyright, a right of a performer, and a master disk right regarding music to execute:
a procedure of registering right information of each music including right holder names of three rights of a copyright owned by an author who has created the music, a right of performance owned by a performer who has played the music, and a master disk right owned by a master disk right holder who has fixed the music in a record for the first time, and use conditions including rates of music use prices received by the author, the performer and the master disk right holder, and information indicating which right of the copyright is permitted in a music data holding unit 11;
a procedure of presenting an input screen fro writing a music name desired to be used to a terminal of a music user side when there is access from the terminal of the music user side;
a procedure of retrieving the music held in the music data holding unit 11 based on the music name transmitted from the terminal of the music user side;
a procedure of presenting the use conditions of the music retrieved by the retrieval step to the terminal of the music user side;
a procedure of distributing the music use prices to the author, the performer and the master disk right holder according to the use conditions held in the music data holding unit 11; and
a procedure of distributing music to the terminal of the music user side.
